# EUROPEAN PATENT APPLICATION

(11) **EP 3 351 114 A1**
(43) Date of publication of application: **25.07.2018**
(21) Application number: 18160191.5
(22) Date of filing: 31.01.2013
(51) Int. Cl.: A23K 40/10, A23K 20/147, A23K 20/142, A23K 20/158, A23K 20/163, A23K 20/10, A23K 50/10, A23K 40/00

(54) **ANIMAL FEED AND A PROCESS FOR ITS PREPARATION**

(30) Priority: 31.01.2012 FI 20120031; 20.06.2012 EP 12397519
(62) Divisional of application: 13707419.1
(71) Applicant: Benemilk Ltd, 21200 Raisio (FI)
(72) Inventor: HOLMA, Merja, 21200 Raisio (FI)
(74) Representative: Seppo Laine Oy

(57) **Abstract**

An object of the invention is a feed by means of which milk production of cows and milk fat content can be increased. Preferably at the same time milk protein content is increased. Preferably also the trans fatty acid content of milk fat is lowered. The feed according to the invention contains, in addition to conventional feed ingredients and conventional additives and other auxiliary agents, inside and on the surface of feed raw material particles a fatty acid mixture in which the content of saturated fatty acids is more than 90 %. Additionally, the feed comprises an emulsifier, wherein the amount of emulsifier is 0.01-1.0% by weight of the feed. The invention is also directed to a process for preparing said feed as well as to a method for changing milk fatty acid composition, for increasing milk production and for increasing milk fat content and increasing milk protein content.

## Description

An object of this invention is an animal feed by means of which milk production of cows and milk fat content can be increased. Preferably at the same time milk protein content is increased. Further preferably, also the trans fatty acid content of milk fat, as of course of the milk also, is lowered. Moreover, degree of feed utilization is improved and methane production is decreased. The feed according to the invention comprises, in addition to conventional feed ingredients and conventional additives and other auxiliary agents, inside and on the surface of the feed raw material particles a fatty acid mixture in which the content of saturated fatty acids is more than 90 %. The invention is also directed to a process for preparing said feed and to a method for changing the fatty acid composition of milk, for rising milk fat content and milk protein content and for increasing milk production i.e. milk yield.

### Background

The consumption of butter among Finns has almost doubled during the last 2 years. As a whole, butter was eaten 10 million kilos more in 2011 than two years earlier. A similar trend exists also elsewhere in Europe. Butter shelves have been found empty in supermarkets. At the same time milk production in Finland has decreased. The national production quota was deceeded by about 300 million kilos during the past quota year. There is thus room for increase in milk production and in milk fat content.

Thanks to rumen, fiber that is unsuitable for monogastric animals can be utilized in cow feeding. However, due to the rumen function, a problem is that approximately 10% of feed energy is lost as methane and thus the energy efficiency is declined. In addition, the environment is burdened. The rumen function is also linked to a problem concerning the nutritional value of milk fat. Milk fat is rich in saturated fatty acids and contains a rather high amount of trans fatty acids. Trans fatty acids have been connected especially to an increase of the harmful LDL cholesterol and to a decrease of the beneficial HDL cholesterol in human blood. Saturated fats are not as harmful since they increase also the proportion of the good cholesterol, that is HDL.

Milk composition and fat quality can to some extent be influenced by feeding of the cows. It is known that when oils are given to cows, milk fat becomes softer. However, oil feeding has negative impacts on both rumen function and milk quality. Protein content is lowered, the proportion of trans fatty acids is increased and the processability properties of milk fat are weakened. A high level of polyunsaturated fatty acids in milk also causes taste defects and preservation problems.

A typical fatty acid composition of milk fat contains more than 70% of saturated fatty acids. The total amount of trans fatty acids varies in the range of 3-10%. When vegetable oil is added into the feed, the proportion of trans fatty acids may rise even to more than 10%.

When a cow eats unprotected fat along with its feed, the fat is exposed to the action of rumen microbes. The lipase enzymes produced by the microbes hydrolyse the ester bonds of triglycerides, forming glycerol and free fatty acids. The hydrolysis is rapid, since already an hour after feeding most triglycerides have been hydrolysed and thus the content of free fatty acids in rumen is increased. Fatty acids have to be in free form before the microbes can utilize them. After polyunsaturated fatty acids have been released, they start to be hydrogenated in the rumen. Biohydrogenation proceeds step by step so that the end result is mainly stearic acid. However, the biohydrogenation process is not complete and several different fatty acids, including trans fatty acids, are formed in the rumen as intermediate products of the biohydrogenation. For this reason, adding vegetable oil to feed results in accumulation of trans fatty acids in milk. The high amount of polyunsaturated fatty acids in feed causes also taste defects and preservation problems in milk.

Biohydrogenation protects rumen microbes because polyunsaturated fatty acids are toxic especially to cellulolytic bacteria. Digestion of fiber may therefore decrease. The detrimental effect of fats can be diminished by preventing triglyceride fat hydrolysis. Fat hydrolysis can be decreased for example by protecting fats with formaldehyde treated casein. Another alternative is to make insoluble fatty acid calcium salts whereby hydrogenation in rumen can be avoided. However, the disadvantages of fatty acid salts limit their usability in feeds. The pungent taste of the salts result in decreased feed intake. The salts may also disturb pelletizing process of the feed.

In experiments, milk fat content has decreased when partly hydrogenated vegetable oil has been infused past the rumen. Partly hydrogenated vegetable oil contains trans fatty acids which have been found to prevent fat synthesis in the mammary gland. A typical industrial partly hydrogenated vegetable oil (soya oil) contains 30-35% trans fatty acids.

WO 2006/085774 describes a starch containing ruminant feed comprising amylose lipid complexes. The aim is to improve the health of the animal by reducing the rate of degradation of starch in rumen. The invention also concerns a method for altering the bioavailability of starch for amylose enzyme.

In a study by Mosley S.A. et al. (J. Dairy Sci. 90:987-993) a ruminant TMR diet was supplemented with three levels of palm oil fatty acids. Milk protein content (protein percentage) did not increase, but it tended to decrease linearly (P<0.08) with palm oil supplement, even though the energy intake of the cows was increased in the test groups receiving the palm oil supplement.

WO2007/048369 describes a supplement to animal feeds comprising at least one fat which is solid at room temperature and at least one starch. The supplement is produced by homogenizing (at 120-170 bar) melted fat with the starchy material at elevated temperatures, cooling and pulverizing. The fat content of the powder is very high.

US 4877621 describes a composition for coating a biologically active substance, and granules comprising a nucleous containing the biologically active substance coated with the composition, used as feedstuff additives to ruminants. The purpose is to protect the biologically active substance from degradation in rumen. The coating is carried out by a fluidized bed technique in organic solvents. The coating composition consists a basic amino copolymer and a hydrophobic substance, which is preferably stearic acid. Stearic acid with purity greater than 90 % is of very particular value, and it is shown that technical grade stearic acid, containing e.g. 47 % palmitic acid, does not provide the desired effects.

EP 0479555 describes extruded animal feed nuggets comprising at least 20 wt% starch and at least 15 wt% added fat. The nuggets increased the milk yield of cows, but at the same time decreased both the fat content (%) and protein content (%) of the milk.

WO 2010/151620 describes extruded feed particles that have been vacuum coated with a high amount of two different fats: first a low melting point fat and then a high melting point fat that encloses the low melting point fat.

WO 2010/108483 describes a method for producing animal food by means of fat extrusion, wherein heated fat is sparayed and cooled so that particles are formed with at least one additive or component, such as selenium. The fat content of the product is high, 30-99.5 % and the additive or component is embedded in the fat. The goal is to protect sensitive additives or components in rumen.

FR2880518 describes a feed supplement of 5-70 % digestible sugars in vegetable oil or hydrogenated fats. The aim is to deliver glucose to the cow against ketosis.

Rumen protected fat supplements have been developed and are marketed e.g. by trade names Lipitec Bovi HF and Energizer RP10.

US 5182126 describes a feed supplement containing C14-C22 fatty acid alkaline earth metal salts and a propionate glucogenous ingredient as essential constituents. In addition, the product may contain C14-C22 fatty acid glycerides.

WO 2007/149818 describes a rumen bypass supplement in compacted particulate form comprising a core of fatty acid alkaline earth metal salt and amino acid. On the central core surface of the pellets, a liquid fatty acid coating and a basic inorganic reagent, such as calcium hydroxide, are added. These constitute a reactive matrix, which is transformed in situ into a interlocking network of polyvalent fatty acid salts.

WO 2011/014069 discloses a formulation for lactating animals, based on a conventional roughage comprising native and rumen-protected fat comprising omega-3 fatty acids.

US 2012/0093974 discloses a ruminant feed composition having a granulated core comprising at least one active substance and at least one layer of coating material surrounding the core. The coating material comprises one or more linear saturated aliphatic monocarboxylic acids. The active substance may be for example amino acids, vitamins or hormones.

Until now, a disadvantage with all ways of feeding dairy cows in order to increase milk fat content has been that they lower milk production and/or increase milk protein content.

### Description of the invention

According to the invention, a feed mixture (i.e. feed) has now been developed, by means of which both milk production and milk fat content can be increased. In addition, milk protein content is not decreased but rather increased as well. Also the proportion of trans fatty acids in milk is lowered. The amount of saturated fatty acids remains approximately the same but the proportion of oleic acid and/or palmitoleic acid is increased.

However, the feed mixture according to the present invention does not disturb rumen function. Digestion of fiber remains unchanged, milk protein content is slightly increased and fat content is remarkably increased. Also milk production rises. Since part of the easily digestable nutrients can pass directly by the rumen undigested, methane formation can be decreased which improves utilization of nutrients.

The feed mixture according to the invention comprises a fatty acid mixture with a high melting point. When this fatty acid mixture is added to feed which is heated to at least above the melting point of the fatty acid mixture, the fat (especially free fatty acids) gradually melts into the raw material particles of the feed. Heat treatment is carried out before optional feed pelletizing, or before drying, or in connection with the pelletizing. When the feed cools, part of the proteins and starch of the feed mixture is protected from microbial degradation. Also the fat is (preferably free fatty acids are) protected from microbial action and, on the other hand, the microbes are protected from fat and thus the digestion of roughage (e.g. coarse feed) remains good.

By feed mixture is here meant feed according to the present invention, that can be used for animals with rumen (ruminants). Ruminants include lactating animals such as for example cattle, goats and sheep. Dairy cows are preferred.

The invention is directed to a feed which contains, in addition to conventional feed ingredients and conventional additives and other auxiliary agents, inside and on the surface of feed raw material particles a fatty acid mixture in which the content of saturated fatty acids is more than 90%. Preferably the mixture does not essentially contain trans fatty acids.

By "conventional feed ingredients and conventional additives and other auxiliary agents" is meant a mixture of at least two commonly used feed raw materials, i.e. raw materials that can be used as starting materials in preparation of the feed mixture according to the present invention. Such feed raw materials include for example grain (for example such as wheat, oat, barley) and oilseed meals (for example such as rapeseed meal or soybean meal). In addition "conventional feed ingredients and conventional additives and other auxiliary agents" may contain for example molasses, vitamins and minerals. Chemically "conventional feed ingredients and conventional additives and other auxiliary agents" include at least protein and starch. The protein content is preferably 15-55 % by weight, more preferably 16-45 % by weight, most preferably 17-40 % by weight of the "conventional feed ingredients and conventional additives and other auxiliary agents". The starch content is preferably 5-50 % by weight, more preferably 7-45 % by weight, more preferably 10-40 % by weight and most preferably 12-35 % by weight of the "conventional feed ingredients and conventional additives and other auxiliary agents".

In view of a preferred embodiment of the invention it is important, in addition to that the amount of saturated fatty acids in the fatty acid mixture is high, also that the mixture is essentially free of trans fatty acids. "Essentially free" or "does not essentially contain" mean within this context that the fatty acid mixture contains at most 5%, preferably at most 4%, more preferably at most 3%, still more preferably at most 2%, even more preferably at most 1%, further more preferably at most 0.5% and most preferably no trans fatty acids at all.

According to the invention the fatty acid mixture is used in an amount of about 1-10% by weight, based on the total weight of the feed. If the feed is a complete feed, the fatty acid mixture is preferably used in an amount of about 1-6 % by weight, preferably 2-5% by weight. On the other hand, if the feed is a concentrate feed according to the invention it contains preferably 2-10% by weight, more preferably 3-8% by weight fatty acid mixture of the total weight of feed.

By "complete feed" is here meant a feed (a compound feed i.e. an industrially produced mixed feed) containing all other main nutrients except nutrients obtained from roughage. By "concentrate feed" is meant a compound feed which has a high concentration of certain substances. The concentrate feed needs to be used in combination with other feed (e.g. grains). The concentrate feed according to the invention however includes more nutrients than conventional supplements. Preferably the feed according to the invention contains 15-50 % by weight, more preferably 16-40 % by weight, most preferably 17-35 % by weight of protein and/or amino acid and/or peptide. This amount includes mainly proteins, but also peptides and small amounts of free amino acids may be included. The protein and/or peptide and/or amino acid content can be measured e.g. by using Kjeldahl N (nitrogen) analysis method. A typical complete feed according to the invention contains 16-28 % by weight, preferably 18-23 % by weight of protein and/or peptide and/or amino acids. A typical concentrate feed according to the invention contains 20-40 % by weight, preferably 24-35 % by weight of protein and/or peptide and/or amino acids.

Preferably the feed according to the invention contains 4-50 % by weight, more preferably 6-45 % by weight, more preferably 8-40 % by weight and most preferably 12-35% by weight of starch. The starch content can be measured e.g. by the method AACCI 76-13.01.

The fatty acid mixture used in the feed according to the invention contains usually at least 90%, preferably more than 95%, more preferably more than 98%, of saturated fatty acids, based on the total amount of the fatty acid mixture. The fatty acid mixture may also fully consist of saturated fatty acids. One preferred feed according to the invention contains a fatty acid mixture comprising at least 60%, more preferably at least 90% of palmitic acid (C16:0) and at most 30%, more preferably at most 10% of stearic acid (C18:0), based on the total amount of the fatty acid mixture. Even more preferably the fatty acid mixture contains at least 95% palmitic acid, not more than 5% stearic acid, and 0-1% of other fatty acids.

The above mentioned saturated fatty acids are already as such protected from microbes as their melting point is high. When the feed is prepared according to the invention, also other components of the feed are protected, and thus both fatty acids and starch and amino acids are more evenly absorbed from the small intestine. Therefore, a high amount of fat does not get alone as such into the small intestine. If it would, the absorption capacity could limit its good effects on milk production.

The Δ9-desaturase enzyme in cow's mammary gland converts part of the stearic acid into oleic acid (C18:1), which softens milk fat. Because stearic acid in large amounts may hinder milk production capacity of the mammary gland, the fatty acid mixture used in the feed according to the invention contains no more than 30% of stearic acid.

The fatty acid mixture may also contain small amounts of unsaturated fatty acids. The proportion of unsaturated fatty acids of the total amount of the fatty acid mixture is 0-10%, more preferably 0-5%, even more preferably 0-2%. The most preferred unsaturated fatty acid for the purposes of the invention is oleic acid (C18:1). Another useful fatty acid is palmitoleic acid (C16:1).

According to one preferred embodiment the fatty acid mixture may contain the following fatty acids (percentages of the fatty acid mixture):

| | | |
|---|---|---|
| C16:0 | 60-100, | preferably 80-100 |
| C18:0 | 0-30, | preferably 0-20 |
| C18:1 | 0-10, | preferably 0-3 |
| others | 0-10, | preferably 0-3 |
| trans fatty acids | 0-2, | preferably 0-1 |

A preferred fatty acid mixture therefore contains 80-100% palmitic acid, 0-20% stearic acid, 0-3% oleic acid, 0-1% trans fatty acids and 0-3% other fatty acids. Further more preferred is a fatty acid mixture containing 80-100% palmitic acid, 0-20% stearic acid, 0-3% oleic acid, no trans fatty acids and 0-3% other fatty acids.

Although the fatty acid mixture may theoretically be 100% pure palmitic acid, it is here still called a fatty acid mixture.

The melting point of a fatty acid mixture rich in saturated fatty acids is high, typically more than 60°C, for example 60-80°C, preferably 63-65°C. Preferably the iodine value of a fatty acid mixture usable in the invention is 0-5, more preferably 0-3, and most preferably 0-1.

The fatty acids in the fatty acid mixture, which the feed according to the invention contains, are preferably almost hundred-percent free fatty acids (at least 98% and more preferably at least 99%). It is also possible that part of the fatty acids are in triglyceride, diglyceride or monoglyceride forms but when given as free fatty acids, their utilization in the small intestine is improved as lipase enzymes do not need first to degrade the glycerides (e.g. triglycerides) into glycerol and free fatty acids. The fatty acid mixture thus preferably comprises 50-100% of free fatty acids, more preferably 75-100% of free fatty acids, most preferably 95-100% of free fatty acids.

The feed according to the invention preferably contains at least one emulsifier. Preferably the emulsifiers are selected from the group consisting of nonionic emulsifiers. The HLB value of the emulsifier is preferably at least 5, more preferably at least 7. Preferably it is at most 14. Castor oil based emulsifiers may be mentioned as examples of preferred emulsifiers. The amount of emulsifier used in the feed according to the invention is 0.01-1.0 % by weight, preferably 0.02-0.2 % by weight and most preferably 0.02-0.05 % by weight of the feed. The amount of emulsifier by the weight of the fatty acid mixture is 0.2-2.0 %, preferably 0.5-1.5 %, most preferably 0.8-1.2 %.

The feed according to the invention preferably does not contain a high amount of fatty acid salts, such as calcium salt, because of their negative effect on milk production. Preferably there is at most 1 %, more preferably at most 0.5%, still more preferably at most 0.1%, even more preferably at most 0.02% by weight fatty acid salts of the feed and most preferably there are no fatty acids as salts present in the feed.

The feed according to the invention preferably does not contain a high amount of triglycerides. Preferably there is at most 7 %, still more preferably at most 5 %, even more preferably at most 3 % triglycerides by weight of the feed.

The feed according to the invention preferably does not contain other saturated free fatty acids than those that are derived from the added fatty acid mixture or it contains them at most 0.5 %, preferably at most 0.4 %, more preferably at most 0.3%, even more preferably at most 0.2 % by weight of the feed.

The feed according to the invention may contain also a glucogenic precursor (such as for example propylene glycol, glycerol, salts of propionate, and combinations thereof), amino acids (such as for example selected from the group consisting of the essential amino acids methionine, lysine and histidine) and/or components which enhance mitochondrial function (such as for example components selected from the group consisting of carnitine, biotin, other B vitamins and omega-3-fatty acids).

Preferably the feed according to the invention is produced by conditioning or expansion, still more preferably by longterm conditioning or expansion, and most preferably by longterm conditioning.

The final feed is preferably in the form of pellets, but it can also be granulas, or meal.

The invention is also directed to a process for the preparation of feed, which process comprises adding, with simultaneous mixing, to conventional feed ingredients and to conventional feed additives and auxiliary agents a fatty acid mixture in which the proportion of saturated fatty acids is more than 90%, heating the feed mixture so that the fatty acid mixture melts and spreads inside and on the surface of the raw material particles of the feed, followed by optional pelletizing, and cooling the mixture. Preferably the whole feed mixture is processed. Thereby part of the proteins and starch of the feed mixture is protected from microbial degradation. With the process according to the invention one can preferably protect the whole feed mixture from microbial degradation.

By preparing feed by the process according to the invention, more digestable nutrients are transported to the cow's small intestine. This enables positive changes in milk production as well as in milk composition and in degree of utilization of the feed. Preferably the degree of utilization of feed is increased by 5 %, more preferably by 10 % and most preferably by 15 % when calculated as the the efficiency of utilization of metabolizable energy intake for milk production (kl).

The process according to the invention can preferably be performed in the following way: The dry raw materials are mixed together with the fatty acid mixture. Emulsifier is added as well as possible liquid raw materials. The obtained mixture is heat treated by adding steam (e.g. 3-6% steam of the feed mixture) to increase the temperature and moisture to a suitable level (e.g. 70-110 °C and e.g. 13-23%, preferably 13-20%, more preferably 13-17% and most preferably 14-15% moisture). When all components have been added and the feed mixture is even, the mixing can be discontinued. Very high pressures should preferably be avoided (e.g. not more than 40 bar, preferably not more than 30 bar and most preferably not more than 20 bar). It is of relevance that the moisture is not too high, but not too low either. The time of treatment (e.g. a few seconds (typically 2-20 s) to 35 minutes (typically 15-30 minutes)), in combination with used temperature, may also effect the spreading of the fatty acid mixture inside and on the suface of the raw material particles. Finally the feed mixture is preferably pelletized, but may also only be dried without pelletizing. The pellets may further be crushed to granulas or milled to meal. By this procedure the fatty acid mixture is evenly applied inside and on the surface of the feed raw material particles.

The process according to the invention can therefore preferably be performed in a conditioner or expander, more preferably in a long term conditioner or expander, and most preferably in a longterm conditioner.

Melting of the fatty acid mixture inside and on the surface of feed raw material particles can be done by heating the feed mixture in a conditioner, preferably in a longterm conditioner, for example at a temperature of at least 75 °C, preferably at least 85 °C for at least 10 seconds, preferably for at least 20 minutes. When higher temperature is used, heating time may correspondingly be shorter. However, the temperature may preferably not exceed 85 °C, if the conditioning continues for more than 30 minutes. On the other hand, also lower temperature, for example 70 °C for at least 25 minutes, may be used. After the heat treatment the feed mixture is optionally pelletized, and cooled.

Alternatively, a feed mixture into which the fatty acid mixture has been blended can be treated with an expander whereby the pressure and heat in the expander cause the fatty acid mixture to melt and to be absorbed inside and on the surface of the feed raw material particles. The pressure in the expander treatment is typically 10-40 bar, preferably 10-20 bar and the temperature about 80-110 °C, preferably more than 100 °C, whereby the retention time is only a few seconds, typically it may be 3-6 seconds. After the expander treatment the feed mixture is optionally pelletized, and cooled.

Thirdly, the feed can be produced by heat treatment during pre-conditioning in the pelletizer, if the conditions (temperature, pressure, moisture and time) are suitable to cause the fatty acid mixture to melt and to be absorbed inside and on the surface of the feed raw material particles.

Preferably the process according to the invention does not include extrusion. Such processing conditions are probably too severe for producing a ruminant feed according to the invention.

In a preferred process according to the invention, an emulsifier which promotes the absorption of the fatty acid mixture into the feed raw material particles is added to the rest of the feed mixture before heating. The emulsifier is added in an amount of 0.01-1.0 %, preferably 0.02-0.2 % and most preferably 0.02-0.05% by weight, based on the total weight of the feed mixture. The emulsifier can be chosen among conventional substances used as emulsifiers. Preferably the emulsifier is a non-ionic emulsifier. More preferably it has a HLB value of at least 5, more preferably at least 7, and most preferably at most 14. Examples of emulsifiers usable in the process according to the invention are castor oil based emulsifiers which are sold for example under the trade name Bredol®. The amount of the emulsifier is 0.2-2.0%, more preferably 0.5-1.5% and most preferably 0.8-1.2% by weight of the fatty acid mixture.

Preferably in the process according to the invention the fatty acid mixture and the emulsifier are added into the rest of the feed mixture before or during mixing. Preferably the fatty acid mixture is added unmelted in dry form.

When using the feed according to the invention, an amount changing the milk composition, increasing the milk fat content, increasing the milk protein content and increasing the milk production means an amount of complete feed or concentrate feed which conforms to the normal feeding recommendations of the lactating animal.

The changes in milk composition are detected as a decrease in the amount of trans fats and as an increase in fat content. Preferably also the milk protein content is increased. At the same time milk production i.e. milk yield (kg milk per cow per day) is increased. Also the degree of feed utilization is improved. The changes are partly shown already a week after the change in feeding but the change in the microbial function takes 3-4 weeks and thus the whole change is preferably detectable only after 3 weeks.

In order to assure a relevant increase in milk production, in milk fat content as well as in milk protein content, the diet of the animal needs to deliver enough of glucose (a glucose source and/or a glucogenous precursor, which the animal metabolizes to glucose), enough of amino acids (especially all the essential amino acids) and further, one needs to follow the feeding recommendations given. However, the effect of the feed according to the invention may not be seen so clearly if used in combination with a very high quality silage or with early summer pasture.

The feed according to the invention can provide the animal a daily amount of the fatty acid mixture disclosed herein, which amount is 0.2-1.0 kg/day, preferably between 0.3-0.8 kg/day, and most preferably between 0.4-0.7 kg/day. Typically the daily amount of the fatty acid mixture is at least 0.2 kg/day, preferably at least 0.3 kg/day, more preferably at least 0.4 kg/day, and most preferably at least 0.5 kg/day. The dosing can also be expressed as amount of fatty acid mixture ingested via the feed according to the invention per amount of produced milk. Suitable dosages are e.g. 10-300 g fatty acid mixture/10 kg milk, more preferably 60-160 g fatty acid mixture/10 kg milk, and most preferably about 100 g fatty acid mixture/10 kg milk. These daily amounts or amounts per 10 kg milk production can suitably be applied in any method or use disclosed here below.

By giving the feed of the invention, the trans fatty acid content of the milk could surprisingly be lowered so that the produced milk contained less than 2.5%, more preferably less than 2.0% trans fatty acids of the milk fatty acids. The fatty acid composition of typical winter milk in Finland contains approximately 3% trans fatty acids. If the nourishment contains oil, the amount is increased.

The invention is still further directed to the use of the feed according to the invention for increasing milk production of a lactating animal and for increasing concentrations of protein and fat in milk, wherein to a lactating animal is given one or more feeds which provide said animal with a daily amount of the fatty acid mixture disclosed herein. A suitable amount is e.g. 0.2-1.0 kg/day.

The invention is still further directed to a method for increasing milk fat content and for increasing milk production, wherein a milk fat increasing amount of a feed according to the invention is given to a lactating animal.

The invention is still further directed to a method for increasing milk fat content and milk protein content, as well as for increasing milk production, in which a milk fat and milk protein and milk production increasing amount of a feed according to the invention is given to a lactating animal.

The invention is still further directed to a method of increasing the milk protein content, in which a milk protein increasing amount of a feed according to the invention is given to a lactating animal.

The invention is still further directed to a method for increasing milk fat content and for changing fatty acid composition, in which a milk fat increasing amount of a feed according to the invention is given to a lactating animal. Preferably the trans fatty acid content of the milk fat is lowered. More preferably the protein content is increased.

The invention still further is directed to a milk preparation process in which the feed according to the invention is fed to a lactating animal and the milk produced by the animal is recovered.

The invention is also directed to a ruminant compound feed comprising
- total lipids in an amount of 1-17%, preferably 2-15%, more preferably 2-13%, still more preferably 3-10%, even more preferably 3-8%, most preferably 3-7% by weight,
- free palmitic acid in an amount of 1-10%, preferably 1-6%, more preferably 2-5% by weight
- proteins in an amount of 15-50%, preferably 16-40% , more preferably 17-35% by weight,
- starch in an amount of 4-50%, preferably 6-45%, more preferably 8-40% and most preferably 12-35% by weight, and
- an emulsifier, and
wherein the amount of free palmitic acid is at least 40%, preferably at least 45%, more preferably at least 50%, still more preferably at least 55%, even more preferably at least 60%, further more preferably at least 65%, still further more preferably at least 70%, even further more preferably at least 75%, still even further more preferably at least 80%, even still further more preferably at least 85%, and most preferably at least 90% by weight of the total lipids.

Preferably the emulsifier is a non-ionic emulsifier. It preferably has a HLB value of at least 5, more preferably at least 7. Preferably it is at most 14. Preferably the emulsifier is a castor oil based emulsifier. The emulsifier is preferably added in an amount of 0.01-1.0%, preferably 0.02-0.2%, most preferably 0.02-0.05% by weight of feed.

Preferably the ruminant compound feed is a complete feed or concentrate feed. It is preferably non-extruded. It is generally in the form of pellets or granulas.

Preferably the ruminant compound feed further comprises at least one component selected from the group consisting of a glucogenic precursor, preferably in an amount of 1-20%, more preferably 5-15% by weight; a mitochondrial function enhancing component, preferably in an amount of 0.5-5%, more preferably 1-3% by weight; and amino acids, preferably in an amount of 0.1-6%, more preferably 1.5-3% by weight.

The ruminant compound feed is obtainable by adding a fatty acid mixture comprising at least 90% palmitic acid to conventional feed ingredients and conventional additives and other auxiliary agents.

A special feature of the feed according to the invention is that the fatty acid mixture added into the feed during the preparation process of the feed mixture protects digestable nutrients of the feed (a compound feed). By means of the process according to the invention the fatty acid mixture is evenly applied inside and on the surface of the feed raw material particles whereby utilization of the nutrients becomes more effective and also methane production is decreased. In particular, the feed raw material particles are protected also inside the feed pellets or granules. Also the fat itself is protected from microbial degradation and, on the other hand, the fat does not disturb microbial function and thus neither digestion of roughage (e.g. coarse feed). A fatty acid having a melting point of more than 60 °C is as such already protected against microbial action.

The feed according to the invention increases the fat content of milk which was to be expected since the feed contains saturated fat. Instead, it was surprising that at the same time the protein content was increased, indicating improvement in nitrogen utilization. It was particularly surprising that there was a remarkable increase in milk production although fat and protein contents were increased. This indicates that degree of utilization of the feed was improved and thus methane production was probably decreased. This also indicates that a fatty acid mixture having the disclosed fatty acid composition, in combination with the disclosed processing of a feed mixture, has protected the feed raw material particles (*i*.*a*. carbohydrates, fats, and proteins) from rumen degradation.

The remarkable decrease in the amount of milk trans fats was also particularly surprising. It was not expected, since the trans fatty acid amount of conventional milk fatty acids is at least 3% even without fat addition, when feeding comprises silage and conventional compound feed based on grains and rapeseed. This confirms that the raw material particles of the feed prepared according to the process of the invention have been protected from rumen degradation. Thus for example the triglyceride hydrolysis of the feed raw materials and the hydrogenation of the unsaturated fatty acids released from the triglycerides has evidently at least partly been hindered. This decreased the formation of trans fatty acids.

The following examples illustrate the invention. The fatty acid percentages presented in this application are percentages which disclose relative chromatogram peak areas, as is evident to a person skilled in the art.

### Example 1. Complete feed according to the invention

The following raw materials were selected for the preparation of complete feed (in percentages by weight).

| | 1. | 2. | 3. |
|---|---|---|---|
| Rapeseed or soya meal | 0-60 | 10 - 50 | 20 - 30 |
| Feed grain (wheat, barley, oats) | 0-70 | 10 - 65 | 20 - 40 |
| Sugar beet pulp | 0-20 | 2 - 18 | 5 - 15 |
| Wheat bran | 0-30 | 5 - 25 | 10 - 15 |
| Molasses | 4-8 | 3 - 7 | 4 - 5 |
| Wheat middlings | 0-20 | 3 - 15 | 3 - 5 |
| Minerals | 0-5 | 0 - 5 | 0 - 5 |
| Premixes (vitamins and micronutrients) | 0-2 | 0 - 2 | 0 - 2 |
| Fatty acid mixture usable in the invention | 2- 5 | 2 - 5 | 3 - 4 |
| Emulsifier | 0.02 - 0.05 | 0.02-0.2 | 0.02 - 0.05 |

### Example 2. Concentrate feed according to the invention

The following raw materials were selected for the preparation of concentrate feed (percentages by weight):

| | 1. | 2. | 3. |
|---|---|---|---|
| Vegetable oilseed meal (soya, rapeseed) | 70-97 | 40 - 90 | 50 - 80 |
| Pea, broad bean | 0-20 | 2 - 18 | 5 - 15 |
| Distiller's grains | 0-20 | 1 - 15 | 3 - 10 |
| Fatty acid mixture usable in the invention | 3-10 | 3 - 10 | 3 - 8 |
| Sugar beet pulp, bran | 0-20 | 2 - 18 | 5 - 15 |
| Grain | 0-10 | 1 - 10 | 2 - 8 |
| Molasses | 0-5 | 1 - 4 | 1 - 3 |
| Premixes (vitamins and micronutrients) | 0-3 | 0 - 3 | 0 - 3 |
| Minerals | 0-5 | 0 - 5 | 0 - 5 |
| Emulsifier | 0.02 - 0.05 | 0.02-0.2 | 0.02 - 0.05 |

### Example 3. Fatty acid composition of a fatty acid mixture usable in the invention

| Fatty acid | % |
|---|---|
| C16:0 | ≥90 |
| C18:0 | ≤10 |
| others | <3 |
| trans fatty acids | 0 |
| free fatty acids | approx. 100 |
| melting point | >60 °C |
| iodine value | ≤1 |

### Example 4. Preparation of test feed

The raw materials of example 1 were selected as starting materials as follows (percentages by weight):

| | |
|---|---|
| Rapeseed meal | 30 |
| Barley | 30 |
| Wheat | 20 |
| Sugar beet pulp | 10.3 |
| Mixed molasses | 4.0 |
| Mineral mixture | 2.3 |
| Micronutrient mixture | 0.2 |
| Vitamin mixture | 0.2 |
| Emulsifier | 0.03 |
| Fatty acid mixture usable in the invention | 3.0 |

The fatty acid mixture according to example 3 (3.0 % by weight) and emulsifier (0.03 % by weight) were mixed into the starting materials to obtain 100% by weight of feed mixture. The feed mixture was mixed in a horizontal mixer for 3 minutes, emulsifier and the fatty acid mixture were melted into the feed mass in a longterm conditioner for 20 minutes at a temperature of 77 °C, in order to slowly melt and spread the fatty acid mixture evenly inside and on the surface of the feed raw material particles with the help of the emulsifier. Then the feed mass was pelletized and cooled.

### Example 5. Feeding experiment 1

In this feeding experiment cows were given 6-16 kg a day of a reference feed or the test feed according to example 4. As a reference feed a complete feed mixture which had been prepared by mixing the starting materials (without fatty acid mixture and emulsifier) of example 4 with rapeseed oil (1.5 % by weight) and calcium salt of palm oil fraction (1.5 % by weight) was used. Both test periods lasted for 4 weeks and the following results were obtained:

| | Reference feed | Test feed |
|---|---|---|
| Milk (kg/d) | 30.0 | 33.5 |
| Milk fat content (% by weight) | 4.16 | 4.53 |
| Milk protein content (% by weight) | 3.16 | 3.27 |

The effect of the test feeding on the trans fatty acid content of milk fatty acids:

| Reference | Test feeding |
|---|---|
| 4.3 % | 1.9 % |

### Example 6. Feeding experiment 2

In this feeding experiment the cows were given 8-12 kg a day of a reference feed or the test feed according to example 4. A commercially obtained complete feed mixture was used as a reference feed. Both test periods lasted for 4 weeks and the following results were obtained:

| | Reference feed | Test feed |
|---|---|---|
| Milk (kg/d) | 28.5 | 30.5 |
| Milk fat content (% by weight) | 4.45 | 4.90 |
| Milk protein content (% by weight) | 3.55 | 3.67 |

The effect of the test feeding on the trans fatty acid content of milk fatty acids:

| Reference | Test feeding |
|---|---|
| 4.9 % | 1.8 % |

The results from the test feedings show that the feed according to the invention increases milk fat and milk protein content, increases milk production and significantly lowers the amount of trans fatty acids in milk.

### Example 7

In this feeding experiment the cows (n=15/group) were given 10 kg per day of either a reference feed or the test feed according to example 4. The reference feed was otherwise similar to the test feed, but did not contain the fatty acid mixture and emulsifier. Both feeds were adjusted to have the same energy content (12 MJ/kg dry matter). The test period lasted for 27 days. The degree of utilization of feed was measured as the efficiency of utilization of metabolizable energy intake for milk production (kl).

| | Reference feed | Test feed |
|---|---|---|
| kl | 0.54 | 0.61 |

The degree of utilization of feed was improved by 13 %.

In the following, embodiments of the invention are disclosed:
1. A feed containing conventional feed ingredients and conventional additives and other auxiliary agents, wherein the feed contains inside and on the surface of feed raw material particles a fatty acid mixture in which the content of saturated fatty acids is more than 90%.
2. The feed according to embodiment 1, wherein the melting point of the fatty acid mixture is more than 60°C.
3. The feed according to embodiment 1 or 2, wherein the fatty acid mixture does not essentially contain trans fatty acids, and preferably contains no trans fatty acids.
4. The feed according to any one of embodiments 1-3, wherein the iodine value of the fatty acid mixture is at most 5, preferably at most 3, and most preferably at most 1.
5. The feed according to any one of embodiments 1-4, wherein the fatty acid mixture contains at least 60% palmitic acid (C16:0) and at most 30% stearic acid (C18:0), preferably at least 80% palmitic acid and at most 20% stearic acid, and most preferably the fatty acid mixture contains at least 95% palmitic acid and at most 5% stearic acid.
6. The feed according to any one of embodiments 1-5, wherein the fatty acid mixture contains the following fatty acids, in %:

| | |
|---|---|
| C16:0 | 60-100, preferably 80-100 |
| C18:0 | 0-30, preferably 0-20 |
| C18:1 | 0-10, preferably 0-3 |
| others | 0-10, preferably 0-3 |
| trans fatty acids | 0-2, preferably 0-1 |

7. The feed according to any one of embodiments 1-6, wherein the fatty acids of the fatty acid mixture are free fatty acids.
8. The feed according to any one of embodiments 1-7, wherein it contains the fatty acid mixture in an amount of 1-10% by weight.
9. The feed according to embodiment 8, wherein it is a complete feed which contains the fatty acid mixture in an amount of 1-6% by weight, preferably 2-5% by weight.
10. The feed according to embodiment 8, wherein it is a concentrate feed which contains the fatty acid mixture in an amount of 2-10% by weight, preferably 3-8% by weight.
11. The feed according to any one of embodiments 1-10, wherein the feed further comprises an emulsifier, preferably a non-ionic emulsifier, more preferably an emulsifier having a HLB value of at least 5, and most preferably a castor oil based emulsifier.
12. A process for preparing a feed, wherein among conventional feed ingredients and conventional feed additives and auxiliary agents is added, with mixing, a fatty acid mixture in which the content of saturated fatty acids is more than 90 %, the feed mixture is heated so that the fatty acid mixture melts and spreads inside and on the surface of feed raw material particles, after which the feed mixture optionally is pelletized, and cooled.
13. The process according to embodiment 12, wherein the fatty acid mixture is melted in the presence of an emulsifier.
14. The process according to embodiment 12, wherein the fatty acid mixture is melted into the feed mixture in a conditioner, preferably in a longterm conditioner, and further more preferably in the presence of an emulsifier.
15. The process according toembodiment 12, wherein heat treatment of the feed mixture, which contains the fatty acid mixture, is carried out in an expander, preferably in the presence of an emulsifier.
16. The process according to any one of embodiments 12-15, wherein 0.01-1.0%, preferably 0.02-0.2 %, most preferably 0.02-0.05 % emulsifier of the total weight of feed mixture, is added to the feed mixture before heating.
17. A feed obtainable by the process of any one of embodiments 12-16.
18. A method for increasing milk fat content and for increasing milk production, wherein to a lactating animal, a milk fat increasing amount of a feed according to any one of embodiments 1-11 or 17 is given.
19. A method for increasing milk fat content and milk protein content, and further for increasing milk production, wherein to a lactating animal, a milk fat and milk protein and milk production increasing amount of a feed according to any one of embodiments 1-11 or 17 is given.
20. A method for increasing milk protein content, wherein to a lactating animal, a milk protein increasing amount of a feed according to any one of embodiments 1-11 or 17 is given.
21. A method for increasing milk fat content and for changing fatty acid composition, wherein to a lactating animal, a milk fat increasing amount of a feed according to any one of embodiments 1-11 or 17 is given.
22. A milk preparation process, wherein the milk has been produced by a process wherein to a lactating animal is given a feed according to any one of embodiments 1-11 or 17, and the milk is recovered.
23. A ruminant compound feed comprising
- total lipids in an amount of 1-17%, preferably 2-15%, more preferably 2-13%, still more preferably 3-10%, even more preferably 3-8%, most preferably 3-7% by weight,
- free palmitic acid in an amount of 1-10%, preferably 1-6%, more preferably 2-5% by weight
- proteins in an amount of 15-50%, preferably 16-40% , more preferably 17-35% by weight,
- starch in an amount of 4-50%, preferably 6-45%, more preferably 8-40% and most preferably 12-35% by weight, and
- an emulsifier, and
wherein the amount of free palmitic acid is at least 40%, preferably at least 45%, more preferably at least 50%, still more preferably at least 55%, even more preferably at least 60%, further more preferably at least 65%, still further more preferably at least 70%, even further more preferably at least 75%, still even further more preferably at least 80%, even still further more preferably at least 85%, and most preferably at least 90% by weight of the total lipids.
24. The ruminant feed according to embodiment 23, wherein the emulsifier is a non-ionic emulsifier, more preferably it has a HLB value of at least 5, preferably at least 7, more preferably at most 14, still more preferably it is a castor oil based emulsifier and most preferably the amount of emulsifier in the feed is 0.01-1.0%, preferably 0.02-0.2%, most preferably 0.02-0.05% by weight.
25. The feed according to embodiment 23 or 24, wherein the feed is a complete feed or concentrate feed, preferably it is non-extruded and/or in the form of pellets or granulas.
26. The feed according to any one of embodiments 23 to 25, wherein the feed further comprises at least one component selected from the group consisting of a glucogenic precursor, preferably in an amount of 1-20%, more preferably 5-15% by weight; a mitochondrial function enhancing component, preferably in an amount of 0.5-5%, more preferably 1-3% by weight; and amino acids, preferably in an amount of 0.1-6%, more preferably 1.5-3% by weight.
27. The feed according to any one of embodiments 23 to 26 obtainable by adding a fatty acid mixture comprising at least 90% palmitic acid to conventional feed ingredients and conventional additives and other auxiliary agents.

## Claims

1. A feed containing conventional feed ingredients and conventional additives and other auxiliary agents, **characterized in that** the feed contains inside and on the surface of feed raw material particles a fatty acid mixture in which the content of saturated fatty acids is more than 90% and the feed comprises an emulsifier, wherein the amount of emulsifier is 0.01-1.0% by weight of the feed.

2. The feed according to claim 1, **characterized in that** the melting point of the fatty acid mixture is more than 60°C; and/or the fatty acid mixture does not essentially contain trans fatty acids, and preferably contains no trans fatty acids; and/or the fatty acids of the fatty acid mixture are free fatty acids; and/or the iodine value of the fatty acid mixture is at most 5, preferably at most 3, and most preferably at most 1.

3. The feed according to any claim 1 or 2, **characterized in that** the fatty acid mixture contains at least 60% palmitic acid (C16:0) and at most 30% stearic acid (C18:0), preferably at least 80% palmitic acid and at most 20% stearic acid, and most preferably the fatty acid mixture contains at least 95% palmitic acid and at most 5% stearic acid; and or the fatty acid mixture contains the following fatty acids, in %:
| | |
|---|---|
| C16:0 | 60-100, preferably 80-100 |
| C18:0 | 0-30, preferably 0-20 |
| C18:1 | 0-10, preferably 0-3 |
| others | 0-10, preferably 0-3 |
| trans fatty acids | 0-2, preferably 0-1 |

4. The feed according to any one of claims 1-3, **characterized in that** it contains the fatty acid mixture in an amount of 1-10% by weight.

5. The feed according to claim 4, **characterized in that** it is a complete feed which contains the fatty acid mixture in an amount of 1-6% by weight, preferably 2-5% by weight; and/or it is a concentrate feed which contains the fatty acid mixture in an amount of 2-10% by weight, preferably 3-8% by weight.

6. The feed according to any one of claims 1-5, **characterized in that** the feed comprises a non-ionic emulsifier, preferably an emulsifier having a HLB value of at least 5, and more preferably a castor oil based emulsifier.

7. A process for preparing a feed, **characterized in that** among conventional feed ingredients and conventional feed additives and auxiliary agents is added, with mixing, a fatty acid mixture in which the content of saturated fatty acids is more than 90 % and at least one emulsifier, wherein the amount of emulsifier is 0.01-1.0% by weight of the feed mixture, the feed mixture is heated so that the fatty acid mixture melts in the presence of an emulsifier and spreads inside and on the surface of feed raw material particles, after which the feed mixture optionally is pelletized, and cooled.

8. The process according to claim 7, **characterized in that** the fatty acid mixture is melted into the feed mixture in a conditioner, preferably in a longterm conditioner.

9. The process according to claim 7, **characterized in that** heat treatment of the feed mixture, which contains the fatty acid mixture, is carried out in an expander.

10. The process according to any one of claims 7-9, **characterized in that** 0.02-0.2 %, preferably 0.02-0.05% emulsifier of the total weight of feed mixture, is added to the feed mixture before heating.

11. A feed obtainable by the process of any one of claims 7-10.

12. A method for increasing milk fat content and for increasing milk production, **characterized in that** to a lactating animal, a milk fat increasing amount of a feed according to any one of claims 1-6 or 11 is given.

13. A method for increasing milk fat content and milk protein content, and further for increasing milk production, **characterized in that** to a lactating animal, a milk fat and milk protein and milk production increasing amount of a feed according to any one of claims 1-6or 11 is given.

14. A method for increasing milk protein content, **characterized in that** to a lactating animal, a milk protein increasing amount of a feed according to any one of claims 1-6 or 11 is given.

15. A ruminant compound feed comprising
- total lipids in an amount of 1-17%, preferably 2-15%, more preferably 2-13%, still more preferably 3-10%, even more preferably 3-8%, most preferably 3-7% by weight,
- free palmitic acid in an amount of 1-10%, preferably 1-6%, more preferably 2-5% by weight
- proteins in an amount of 15-50%, preferably 16-40%, more preferably 17-35% by weight,
- starch in an amount of 4-50%, preferably 6-45%, more preferably 8-40% and most preferably 12-35% by weight, and
- an emulsifier, and
wherein the amount of free palmitic acid is at least 40%, preferably at least 45%, more preferably at least 50%, still more preferably at least 55%, even more preferably at least 60%, further more preferably at least 65%, still further more preferably at least 70%, even further more preferably at least 75%, still even further more preferably at least 80%, even still further more preferably at least 85%, and most preferably at least 90% by weight of the total lipids.

16. The ruminant feed according to claim 15, wherein the emulsifier is a non-ionic emulsifier, more preferably it has a HLB value of at least 5, preferably at least 7, more preferably at most 14, still more preferably it is a castor oil based emulsifier and most preferably the amount of emulsifier in the feed is 0.01-1.0%, preferably 0.02-0.2%, most preferably 0.02-0.05% by weight.

17. The feed according to claim 15 or 16, wherein the feed is a complete feed or concentrate feed, preferably it is non-extruded and/or in the form of pellets or granulas.

18. The feed according to any one of claims 15 to 17, wherein the feed further comprises at least one component selected from the group consisting of a glucogenic precursor, preferably in an amount of 1-20%, more preferably 5-15% by weight; a mitochondrial function enhancing component, preferably in an amount of 0.5-5%, more preferably 1-3% by weight; and amino acids, preferably in an amount of 0.1-6%, more preferably 1.5-3% by weight.

19. The feed according to any one of claims 15 to 18 obtainable by adding a fatty acid mixture comprising at least 90% palmitic acid to conventional feed ingredients and conventional additives and other auxiliary agents.
